# EUROPÄISCHE PATENTSCHRIFT

(11) **EP 3 167 713 B1**
(45) Veröffentlichungstag und Bekanntmachung des Hinweises auf die Patenterteilung: **23.01.2019**
(21) Anmeldenummer: 16183021.1
(22) Anmeldetag: 05.08.2016
(51) Int. Cl.: A01M 25/00

(54) **SCHNECKENFALLE**
SNAIL TRAP
PIEGE A LIMACES

(30) Priorität: 07.08.2015 AT 507112015
(43) Veröffentlichungstag der Anmeldung: 17.05.2017
(73) Patentinhaber: Penninger, Markus, 4621 Sipbachzell (AT)
(72) Erfinder: PENNINGER, Andreas, 4652 Fischlham (AT); PENNINGER, Markus, 4621 Sipbachzell (AT)
(74) Vertreter: Burger, Hannes

(56) Entgegenhaltungen:
- WO-A1-00/60938
- DE-U1- 29 613 689
- NO-A- 20 120 887
- US-A- 4 251 946

## Beschreibung

Die Erfindung betrifft eine Schneckenfalle.

Aus der DE 296 13 689 U1 ist eine Schneckenfalle bekannt, welche einen Aufnahmeraum zur Aufnahme eines Lockmittels und einen weiteren Aufnahmeraum zur Aufnahme eines Schneckengiftes aufweist. Die Schneckenfalle besteht aus einer Vielzahl von Einzelteilen, welche durch eine Verschraubung zusammengehalten werden.

Die aus der DE 296 13 689 U1 bekannte Schneckenfalle weist den Nachteil auf, dass diese einen komplizierten Aufbau aufweist und daher schwierig zu warten ist. Darüber hinaus ist die Schneckenfalle kostspielig herzustellen.

NO 20 120 887 A offenbart eine bekannte Schneckenfalle.

Der vorliegenden Erfindung liegt die Aufgabe zugrunde eine Schneckenfalle zu schaffen, welche einen einfachen Aufbau aufweist und daher einfach zu warten ist und darüber hinaus günstig in der Herstellung ist.

Diese Aufgabe der Erfindung wird durch die Schneckenfalle gemäß Anspruch 1 gelöst. Erfindungsgemäß ist eine Schneckenfalle mit einem ersten Aufnahmeraum, welcher in etwa im Zentrum der Schneckenfalle angeordnet ist und zur Aufnahme eines Lockmittels dient ausgebildet. Die Schneckenfalle umfasst außerdem einen zweiten Aufnahmeraum welcher den ersten Aufnahmeraum umgibt und zur Aufnahme von einem Schneckengift dient. Der erste Aufnahmeraum und der zweite Aufnahmeraum sind in einem ersten Gehäuseteil ausgebildet. Außerdem ist ein zweites Gehäuseteil ausgebildet, welches mittels einer Rastverbindung am ersten Gehäuseteil befestigt ist und den ersten Aufnahmeraum zumindest bereichsweise umgibt, wobei an der Oberseite des zweiten Gehäuseteils eine Wartungsöffnung ausgebildet ist durch welche Wartungsöffnung der erste Aufnahmeraum und der zweite Aufnahmeraum zumindest teilweise zugänglich sind. Weiters ist ein Wartungsdeckel ausgebildet, welcher zur Wartung bedarfsweise entfernbar in der Wartungsöffnung des zweiten Gehäuseteils aufgenommen ist.

Die erfindungsgemäße Ausführung der Schneckenfalle weist den Vorteil auf, dass sie unter Verwendung von möglichst wenigen Bauteilen einfach aufgebaut ist und somit robust und kostengünstig zu fertigen ist. Dies bringt insbesondere einen Vorteil mit sich, wenn die Schneckenfalle in einem Produktionsprozess zur Massenfertigung in hoher Stückzahl gefertigt werden soll. Durch den einfachen und robusten Aufbau kann die Schneckenfalle darüber hinaus eine überdurchschnittlich lange Lebensdauer aufweisen, da eine mechanische Beschädigung durch Fremdeinwirkung möglichst unterbunden werden kann.

Weiters kann es zweckmäßig sein, wenn das zweite Gehäuseteil einen schirmartigen Vorsprung aufweist, welcher über den zweiten Aufnahmeraum des ersten Gehäuseteils hinausreicht und diesen in einer Draufsicht gesehen überdeckt. Hierbei ist von Vorteil, dass der zweite Aufnahmeraum des ersten Gehäuseteils durch den Schirmartigen Vorsprung gut gegen Witterungseinflüsse abgeschirmt werden kann. Somit kann das Auswaschen von Schneckenkorn aus der Schneckenfalle und damit auch das Eindringen von Giftstoffen in den Boden weitestgehend vermieden werden.

Ferner kann vorgesehen sein, dass der Wartungsdeckel mittels einer weiteren Rastverbindung in der Wartungsöffnung des zweiten Gehäuseteils aufgenommen ist. Von Vorteil ist hierbei, dass durch die Rastverbindung hintangehalten werden kann, dass der Deckel etwa durch Windeinflüsse oder durch Tiere ungewollt von der Wartungsöffnung entfernt wird.

Darüber hinaus kann vorgesehen sein, dass das Lockmittel in einem Lockmittelbehältnis aufnehmbar ist, welches in den ersten Aufnahmeraum einsetzbar ist, wobei das Lockmittelbehältnis durch die Wartungsöffnung aus dem ersten Aufnahmeraum entfernbar ist. Hierbei ist von Vorteil, dass das Lockmittel durch das Lockmittelbehältnis abgeschlossen werden kann, wodurch es möglich ist, dass das Lockmittel dosiert abgegeben werden kann. Dadurch kann der Lockmittelverbrauch gesenkt werden bzw. wird das Lockmittel für die verschiedensten Säugetiere nicht zugänglich gemacht. Darüber hinaus kann ein derart abgepacktes Lockmittel einfach ausgetauscht bzw. zu Wartungszwecken nachgefüllt werden. Weiters kann das Lockmittel bereits richtig dosiert und vorportioniert im Einzelhandel vertrieben werden. Insbesondere kann durch diese Maßnahme ein flüssiges Lockmittel verwendet werden.

Vorteilhaft ist auch eine Ausprägung, gemäß welcher vorgesehen sein kann, dass das Lockmittelbehältnis zur Aufnahme einer Flüssigkeit ausgebildet ist und einen geschlossenen Innenraum aufweist, wobei das Lockmittelbehältnis darüber hinaus einen aus dem Innenraum herausragenden Docht zur dosierten Abgabe von Lockmittel aufweist. Insbesondere durch den Einsatz eines Dochtes kann das Lockmittel in richtig dosierter Menge an die Umgebung abgegeben werden. Besonders ein flüssiges Lockmittel kann dadurch verdampft und somit an die Umgebung abgegeben werden.

Gemäß einer Weiterbildung ist es möglich, dass ein Erdspieß ausgebildet ist, welcher abnehmbar an einer Unterseite des ersten Gehäuseteils befestigt ist. Durch den Erdspieß kann die Schneckenfalle in den Boden eingesteckt werden. Dadurch kann verhindert werden, dass die Schneckenfalle etwa durch Witterungseinflüsse oder durch Tiere in dessen Position verschoben oder umgeworfen wird. Der Erdspieß ist vorzugsweise abnehmbar an der Unterseite des ersten Gehäuseteils befestigt, sodass die Schneckenfalle auch ohne Verwendung des Erdspießes aufgestellt werden kann.

Ferner kann es zweckmäßig sein, dass die Rastverbindung zwischen dem ersten Gehäuseteil und dem zweiten Gehäuseteil durch zumindest zwei im Bereich des zweiten Aufnahmeraums angeordnete Ausnehmungen und damit korrespondierende, am zweiten Gehäuseteil angeordnete, Rastnasen gebildet ist. Hierbei ist von Vorteil, dass eine derartige Rastverbindung einfach herzustellen ist und dass die Rastverbindung eine hohe Festigkeit aufweisen kann. Darüber hinaus sind die Rastnasen von außen leicht zugänglich, sodass etwa für Wartungszwecke das erste Gehäuseteil einfach vom zweiten Gehäuseteil getrennt werden kann.

Darüber hinaus kann vorgesehen sein, dass das zweite Gehäuseteil eine zylindrische und parallel zur Mittelachse verlaufende Trennwand aufweist. Mittels der Trennwand kann zwischen erstem Gehäuseteil und zweitem Gehäuseteil ein Vorratsraum geschaffen werden in welchem das Schneckengift angeordnet ist, wobei es durch die Schwerkraft in den zweiten Aufnahmeraum absackt.

Weiters kann vorgesehen sein, dass das erste und das zweite Gehäuseteil als Spritzgusselemente, insbesondere aus einem Kunststoffmaterial, ausgebildet sind. Dabei ist von Vorteil, dass derartige Spritzgusselemente in einem Prozess zur Massenfertigung einfach und kostengünstig hergestellt werden können. Darüber hinaus können Spritzgusselemente eine hohe Festigkeit aufweisen. Als Material kann ein thermoplastischer Kunststoff, insbesondere ein Kunststoff aus der Gruppe der Polyolefine, wie etwa PE verwendet werden.

Darüber hinaus kann vorgesehen sein, dass das zweite Gehäuseteil im Bereich der Wartungsöffnung zumindest eine Locköffnung aufweist, durch welche das Lockmittel nach außen wirken kann. Durch die Locköffnung kann das Lockmittel besonders effektiv wirken, um Schnecken innerhalb eines großen Umkreises anlocken zu können.

Das erste und das zweite Gehäuseteil können jeweils Einstückig ausgebildet sein und daher aus mehreren Elementen bestehen, welche untrennbar miteinander verbunden sind. Alternativ dazu ist es auch denkbar, dass die beiden Gehäuseteile jeweils einteilig ausgebildet sind und beispielsweise als Spritzgussstücke gefertigt sind.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht der Schneckenfalle;
- Fig. 2: eine perspektivische Ansicht der Schneckenfalle in teilweise geschnittener Darstellung;
- Fig. 3: eine Ansicht von unten auf die Schneckenfalle;
- Fig. 4: eine Schnittdarstellung der Schneckenfalle gemäß der Schnittlinie IV-IV aus Fig. 3;
- Fig. 5: eine Schnittdarstellung der Schneckenfalle gemäß der Schnittlinie V-V aus Fig. 3;
- Fig. 6: eine perspektivische Ansicht des Wartungsdeckels der Schneckenfalle, wobei die Unterseite des Wartungsdeckels sichtbar ist;
- Fig. 7: eine perspektivische Ansicht von schräg unten auf das zweite Gehäuseteil;
- Fig. 8: eine perspektivische Ansicht von schräg oben auf das zweite Gehäuseteil;
- Fig. 9: eine perspektivische Ansicht von schräg unten auf das erste Gehäuseteil;
- Fig. 10: eine perspektivische Ansicht von schräg oben auf das erste Gehäuseteil.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

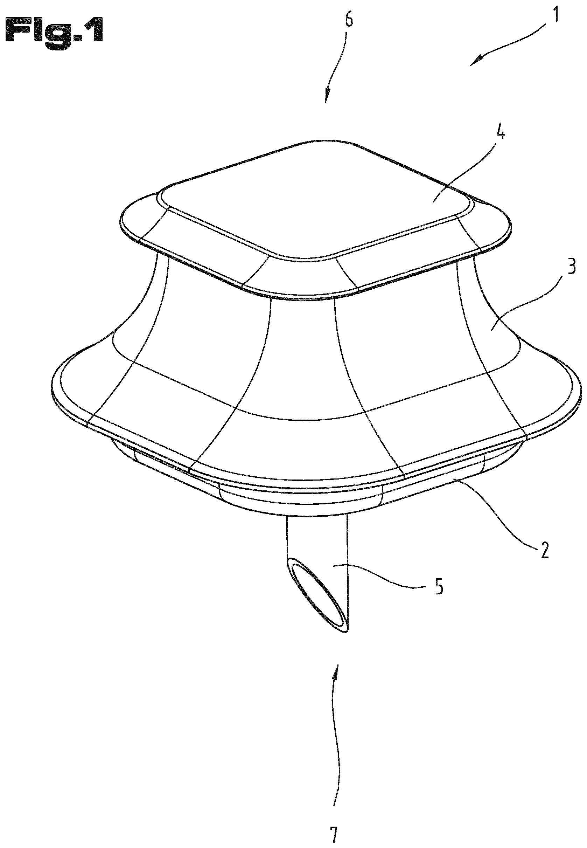

Fig. 1 zeigt eine perspektivische Ansicht einer Schneckenfalle 1 mit einem ersten Gehäuseteil 2 und einem zweiten Gehäuseteil 3. Außerdem umfasst die Schneckenfalle 1 einen Wartungsdeckel 4, welcher abnehmbar am zweiten Gehäuseteil 3 befestigt ist und durch welchen der Innenraum der Schneckenfalle 1 zugänglich ist.

Wie aus Fig. 1 weiters ersichtlich kann vorgesehen sein, dass die Schneckenfalle 1 einen Erdspieß 5 umfasst, mittels welchem die Schneckenfalle 1 im Erdreich befestigt werden kann.

In Fig. 1 ist die Schneckenfalle 1 in Gebrauchslage orientiert, wobei sich der Wartungsdeckel 4 an einer Oberseite 6 der Schneckenfalle 1 befindet und der Erdspieß 5 sich an einer Unterseite 7 der Schneckenfalle 1 befindet. Wird in diesem Dokument von oben bzw. unten gesprochen, so beziehen sich diese Lage- bzw. Orientierungsangaben stets auf die Einbau- bzw. Gebrauchslage der Schneckenfalle 1.

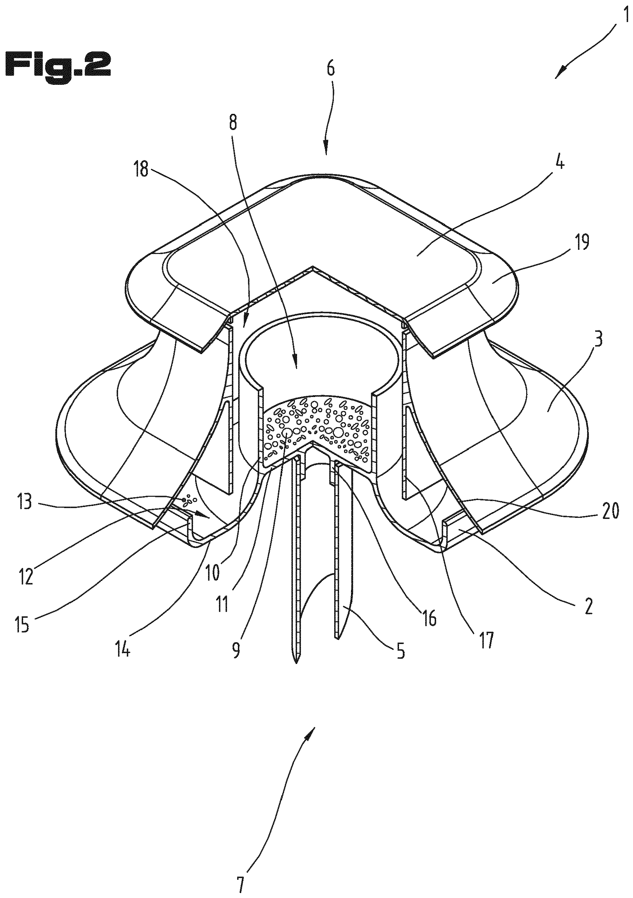

Fig. 2 zeigt eine perspektivische Ansicht der Schneckenfalle 1. In der Fig. 2 ist die Schneckenfalle 1 teilweise geschnitten dargestellt, sodass auch der Innenraum der Schneckenfalle 1 sichtbar ist.

Wie aus Fig. 2 ersichtlich umfasst das erste Gehäuseteil 2 einen ersten Aufnahmeraum 8, welcher zur Aufnahme eines Lockmittels 9 ausgebildet ist. Der erste Aufnahmeraum 8 ist vorzugsweise in etwa im Zentrum der Schneckenfalle 1 angeordnet. Der erste Aufnahmeraum 8 ist nach außen hin durch die erste Begrenzungswand 10 und nach unten hin durch den Boden 11 begrenzt. Die erste Begrenzungswand 10 kann vorzugsweise kreiszylindrisch ausgebildet sein.

Weiters ist im ersten Gehäuseteil 2 ein zweiter Aufnahmeraum 12 ausgebildet, welcher zur Aufnahme von Schneckengift 13, wie etwa Schneckenkorn, dient. Der erste Aufnahmeraum 12 ist vorzugsweise um den ersten Aufnahmeraum 8 herum angeordnet. Durch diese Platzierung des ersten und des zweiten Aufnahmeraumes 8, 12 kann erreicht werden, dass die Schnecken vom Lockmittel 9 angelockt werden und sich diese in Richtung Zentrum der Schneckenfalle 1 bewegen. Dabei passieren sie den zweiten Aufnahmeraum 12, in welchem das Schneckengift 13 angeordnet ist, wobei sie das Schneckengift 13 berühren. Durch diese Berührung mit dem Schneckengift 13 erfolgt eine Vergiftung der Schnecke, wodurch sich die Schnecken wieder aus der Schneckenfalle 1 entfernen und an einem von der Schneckenfalle 1 entfernten Ort verenden. Somit wird mittels der vorliegenden Schneckenfalle 1 erreicht, dass die Schnecken nicht in der Schneckenfalle 1 verenden, wodurch der Wartungsaufwand zum Betrieb der Schneckenfalle 1 verringert werden kann.

Der zweite Aufnahmeraum 12 wird durch die erste Begrenzungswand 10, den Boden 14 des zweiten Aufnahmeraums 12 und durch eine zweite Begrenzungswand 15 begrenzt. Mit anderen Worten ausgedrückt ist der zweite Aufnahmeraum 12 eine Art Senke, welche den ersten Aufnahmeraum 8 umgibt. Die zweite Begrenzungswand 15 kann als Abstreifelement dienen. Insbesondere kann erreicht werden, dass Schnecken welche sich im zweiten Aufnahmeraum 12 befinden und die Schneckenfalle 1 verlassen, sich derart über die die zweite Begrenzungswand 15 bewegen, dass das an den Schnecken anhaftende Schneckengift 13 durch die zweite Begrenzungswand 15 abgestreift wird. Hierzu kann vorgesehen sein, dass die zweite Begrenzungswand 15 an dessen Oberkante scharfkantig ausgebildet ist, sodass das Schneckengift 13 von der Schnecke abgestreift werden kann.

Weiters kann vorgesehen sein, dass im Gebrauchszustand der Schneckenfalle 1 der Boden 14 des zweiten Aufnahmeraums 12 am Erduntergrund aufliegt. Dadurch kann erreicht werden, dass die Schnecken mühelos in die Schneckenfalle 1 gelangen können und somit möglichst viele Schnecke mittels der Schneckenfalle 1 beseitigt werden können.

Wie aus Fig. 2 weiters ersichtlich kann vorgesehen sein, dass am Boden 11 des ersten Aufnahmeraums 8 ein Aufnahmezapfen 16 zur Aufnahme des Erdspießes 5 ausgebildet ist. Insbesondere kann vorgesehen sein, dass der Erdspieß 5 in Form eines Hohlzylinders ausgebildet ist, wobei ein Innendurchmesser des Hohlzylinders derart bemessen ist, dass er auf den Aufnahmezapfen 16 aufgeschoben werden kann. An der dem Aufnahmezapfen 16 abgewandten Seite des Erdspießes 5, kann dieser zugespitzt sein, um ihn leichter in das Erdreich hineindrücken zu können.

Im zusammengebauten Zustand der Schneckenfalle 1 sind das erste Gehäuseteil 2 und das zweite Gehäuseteil 3 miteinander verbunden. Insbesondere sind die beiden Gehäuseteile 2, 3 derart zueinander positioniert, dass eine Trennwand 17 des zweiten Gehäuseteils 3 zwischen der ersten Begrenzungswand 10 und der zweiten Begrenzungswand 15 des ersten Gehäuseteils 2 angeordnet ist. Durch die Trennwand 17 kann erreicht werden, dass der erste Aufnahmeraum 8 aufgrund der baulichen Gegebenheit für Schnecken nicht zugänglich ist. Die Trennwand 17 kann als zylindrische Wand ausgebildet sein, wobei sie vorzugsweise eine Kreisrunde bzw. eine rechteckige Querschnittsform aufweisen kann. Es ist jedoch auch denkbar, dass die Trennwand 17 eine sonstige beliebige Querschnittsform aufweist. An der Oberseite 6 des zweiten Gehäuseteils 3 ist eine Wartungsöffnung 18 ausgebildet, durch welche der erste Aufnahmeraum 8 bzw. der zweite Aufnahmeraum 12 von oben zugänglich sind. Dadurch kann erreicht werden, dass die Schneckenfalle 1 zur Wartung, insbesondere zur Nachfüllung von Schneckengift 13 bzw. Lockmittel 9 im eingebauten Zustand im Boden verbleiben kann. Die Wartungsöffnung 18 kann direkt durch die Trennwand 17 begrenzt werden.

Wie aus Fig. 2 weiters ersichtlich ist der Wartungsdeckel 4 auf die Wartungsöffnung 18 aufgesetzt, sodass diese durch den Wartungsdeckel 4 verschlossen ist. Der Wartungsdeckel 4 weist in dessen Querschnittserstreckung zumindest die Querschnittsabmessung der Wartungsöffnung 18 auf.

Vorzugsweise kann vorgesehen sein, dass der Wartungsdeckel 4 einen schirmartigen Vorsprung 19 aufweist, welcher seitlich gegenüber der Wartungsöffnung 18 vorragt und somit das Eindringen von Regenwasser in den Innenraum der Schneckenfalle 1 weitestgehend vermieden werden kann.

Insbesondere kann vorgesehen sein, dass der schirmartige Vorsprung 19 des Wartungsdeckels 4 leicht nach unten gezogen ist, sodass vermieden werden kann, dass Wasser an der Unterseite des Wartungsdeckels entlang in das Innere der Schneckenfalle 1 läuft.

Wie aus Fig. 2 weiters ersichtlich kann vorgesehen sein, dass das zweite Gehäuseteil 3 ebenfalls einen schirmartigen Vorsprung 20 aufweist, welcher an die Trennwand 17 anschließt. Der Schirmartige Vorsprung 20 ragt vorzugsweise über die zweite Begrenzungswand 15 des ersten Gehäuseteils 2 hinaus. Dadurch kann erreicht werden, dass Regenwasser nicht in den zweiten Aufnahmeraum 12 gelangen kann. Der Schirmartige Vorsprung 20 ist vorzugsweise so weit nach unten gezogen, dass im Betriebszustand der Schneckenfalle 1 der Abstand zwischen Unterkante des schirmartigen Vorsprunges 20 und dem Boden ausreichend gering gehalten werden kann, sodass Säugetiere, wie etwa Igel, Katzen, Hunde und dergleichen nicht an das Schneckengift 13 gelangen können.

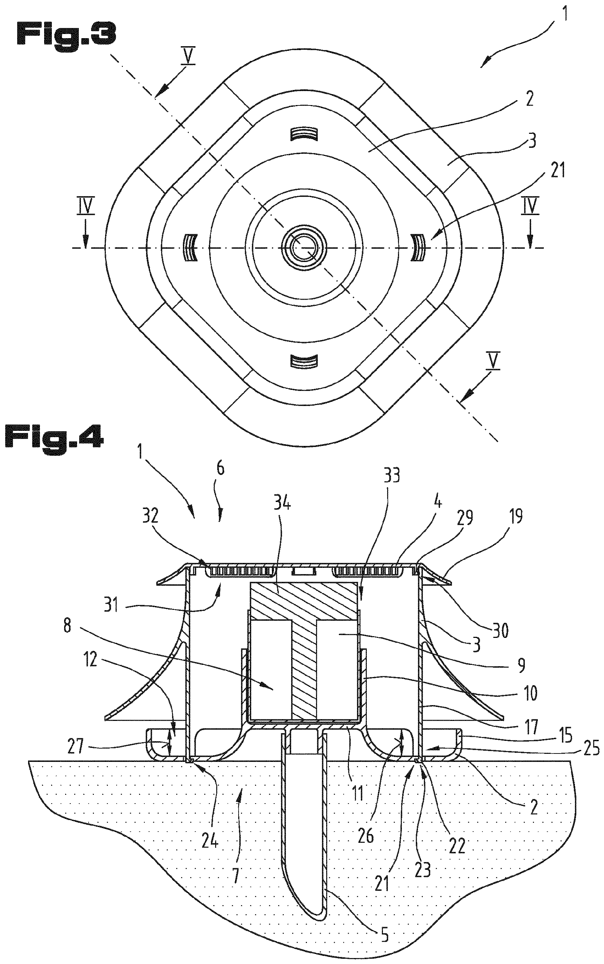

Fig. 3 zeigt eine Ansicht von unten auf die Schneckenfalle 1, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Aus Fig. 3 ist ersichtlich, dass zwischen ersten Gehäuseteil 2 und zweiten Gehäuseteil 3 eine Rastverbindung 21 ausgebildet ist, mittels welcher das erste Gehäuseteil 2 und das zweite Gehäuseteil 3 miteinander verbunden sind.

Fig. 4 zeigt eine Schnittdarstellung der Schneckenfalle 1, insbesondere gemäß der Schnittlinie IV-IV nach Fig. 3, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

In Fig. 4 ist die Rastverbindung 21 zwischen erstem Gehäuseteil 2 und zweitem Gehäuseteil 3 besonders gut ersichtlich. Insbesondere ist ersichtlich, dass am zweiten Gehäuseteile 3, insbesondere an dessen Unterseite 7, zwei oder mehrere Rastnasen 22 angeordnet sein können, welche in eine Ausnehmung 23 im ersten Gehäuseteil 2 eingreifen. Die Ausnehmung 23 kann insbesondere im Boden 14 des zweiten Aufnahmeraumes 12 angeordnet sein. Durch die Rastnasen 22 und die damit korrespondierenden Ausnehmungen 23 kann eine formschlüssige Verbindung zwischen erstem Gehäuseteil 2 und zweitem Gehäuseteil 3 geschaffen werden.

Die Rastnasen 22 sind vorzugsweise derart ausgebildet, dass sie eine Schräge 24 aufweisen, durch welche sie beim Zusammenbau einfach in die Ausnehmungen 23 eingesteckt werden können, wobei sie durch die Schräge 24 beim Einschieben auseinander gedrückt werden. Durch das elastische Rückstellverhalten schnappen die Rastnasen 22 bei Erreichen der Endposition in die Ausnehmungen 23 ein. Im zusammengefügten Zustand hintergreifen die Rastnasen 22 die Ausnehmungen 23 formschlüssig und schaffen somit eine Verbindung zwischen erstem Gehäuseteil 2 und zweitem Gehäuseteil 3. Zum Auseinanderbauen des ersten Gehäuseteils 2 und des zweiten Gehäuseteils 3 kann vorgesehen sein, dass es notwendig ist, dass die Rastnasen 22 durch externe Kraftaufbringung aus dem formschlüssigen Eingriff mit der Ausnehmung 23 gebracht werden. Dadurch können das erste Gehäuseteil 2 und das zweite Gehäuseteil 3 voneinander getrennt werden. Insbesondere ist es notwendig, dass ein Sockelbereich 25 des zweiten Gehäuseteils 3, an welchem die Rastnasen 22 angeordnet sind, elastisch verformbar ist, um die Funktionalität der Rastverbindung 21 erreichen zu können.

Wie aus Fig. 4 weiters ersichtlich, kann vorgesehen sein, dass die Trennwand 17 zentral zwischen der ersten Begrenzungswand 10 und der zweiten Begrenzungswand 15 angeordnet ist. Wie aus Fig. 4 weiters ersichtlich, sind die Sockelbereiche 25 in etwa so hoch ausgebildet, dass eine lichte Höhe 26 in etwa gleich groß ist wie eine Wandhöhe 27 der zweiten Begrenzungswand 15.

Weiters ist aus Fig. 4 ersichtlich, dass vorgesehen sein kann, dass der Wartungsdeckel 4 mittels einer weiteren Rastverbindung 28 am zweiten Gehäuseteil 3 befestigt ist. Insbesondere kann vorgesehen sein, dass am Wartungsdeckel 4 Rastnasen 29 ausgebildet sind. Welche in eine Rastvertiefung 30 in der Trennwand 17 des zweiten Gehäuseteils 3 eingreifen.

Darüber hinaus kann vorgesehen sein, dass im zweiten Gehäuseteil 3, insbesondere im Bereich der Wartungsöffnung 18, zumindest eine Locköffnung 31 ausgebildet ist, welche die Trennwand 17 durchdringt. Somit kann erreicht werden, dass das Lockmittel 9 möglichst effektiv nach außen strömt, um Schnecken anlocken zu können. Weiters kann vorgesehen sein, dass der Wartungsdeckel 4 im Bereich der Locköffnung 31 mehrere Finger 32 aufweist, welche die Locköffnung 31 zumindest teilweise abdecken. Dadurch kann vermieden werden, dass Insekten durch die Locköffnung 31 in die Schneckenfalle 1 gelangen. Alternativ dazu kann vorgesehen sein, dass die Locköffnung 31 derart ausgebildet ist bzw. mit Fingern versehen ist, sodass das Hindurchkriechen von Insekten aufgrund der geringen Schlitzweiten unterbunden werden kann.

Wie aus Fig. 4 weiters ersichtlich kann vorgesehen sein, dass das Lockmittel 9 in einem Lockmittelbehältnis 33 angeordnet ist, welches beispielsweise zur Aufnahme von Flüssigkeiten dient. Weiters kann vorgesehen sein, dass das Lockmittelbehältnis 33 einen Docht 34 aufweist, durch welchen ein Flüssiges Lockmittel aufgenommen werden kann und gleichmäßig verdampfen kann, sodass eine kontinuierliche Abgabe des Lockmittels 9 erfolgen kann.

In einer weiteren nicht dargestellten Alternativvariante kann das Lockmittel 9 beispielsweise in Form eines Granulates oder in Form eines Festkörpers ausgebildet sein.

In wieder einer anderen nicht dargestellten Alternativvariante kann das Lockmittel 9 beispielsweise in einer Treibgasflasche enthalten sein und durch einen Betätigungsmechanismus zeitgesteuert abgegeben werden.

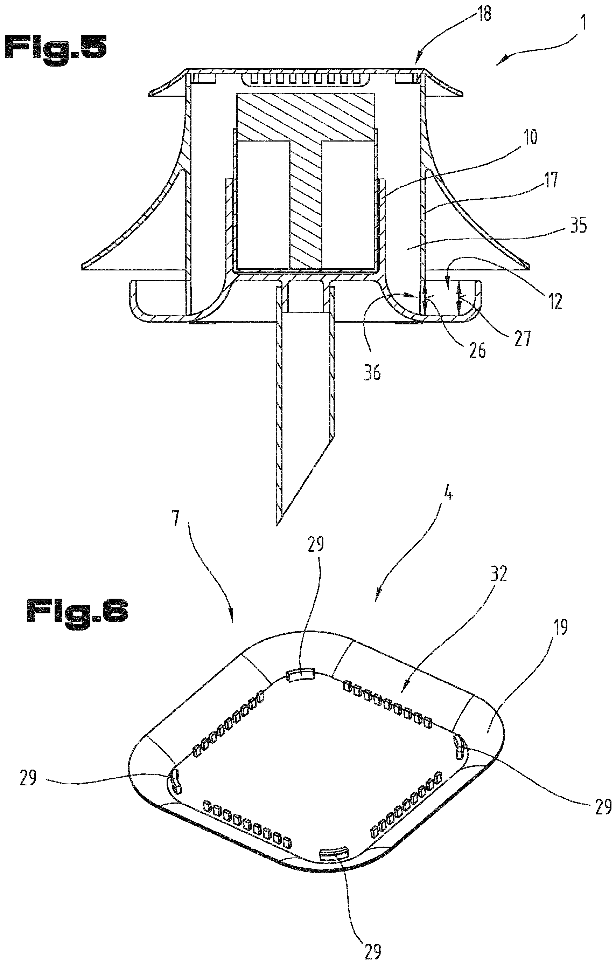

Fig. 5 zeigt eine Schnittdarstellung der Schneckenfalle 1 gemäß der Trennlinie V-V nach Fig. 3, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, kann das Schneckengift 13 durch die Wartungsöffnung 18 in das Innere der Schneckenfalle 1 eingefüllt werden. Insbesondere kann durch die erste Begrenzungswand 10 bzw. durch die Trennwand 17 und den zweiten Aufnahmeraum 12 eine Vorratskammer 35 ausgebildet sein, in welcher eine größere Menge an Schneckengift 13 gelagert werden kann. Durch die Schwerkraft kann das Schneckengift 13 von der Vorratskammer 35 durch Austrittsöffnungen 36, welche zwischen den Sockelbereichen 25 gebildet sind, in den zweiten Aufnahmeraum 12 dringen. Wenn nun bedingt durch die Benutzung der Schneckenfalle 1 das Schneckengift 13 im zweiten Aufnahmeraum 12 zusehends aufgebraucht wird, so kann durch die Vorratskammer 35 neues Schneckengift 13 in den zweiten Aufnahmeraum 12 strömen.

Fig. 6 zeigt den Wartungsdeckel 4 in einer perspektivischen Ansicht, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

In Fig. 6 sind die Finger 32 bzw. die Rastnasen 29 besonders gut ersichtlich.

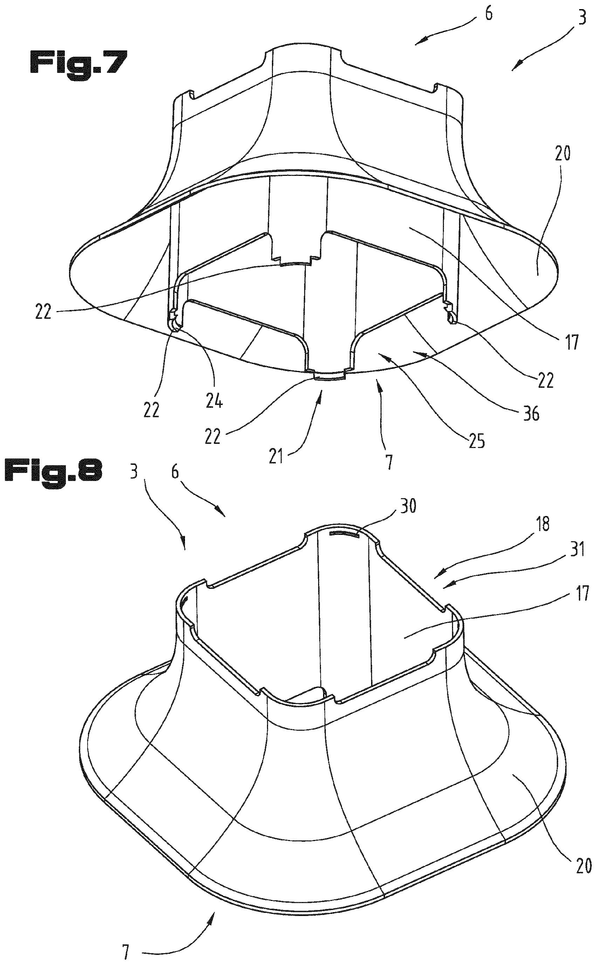

Die Fig. 7 und 8 zeigen das zweite Gehäuseteil 3 in einer Ansicht von schräg unten bzw. schräg oben, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

In den Fig. 7 und 8 ist der Aufbau des zweiten Gehäuseteils 3 besonders gut ersichtlich.

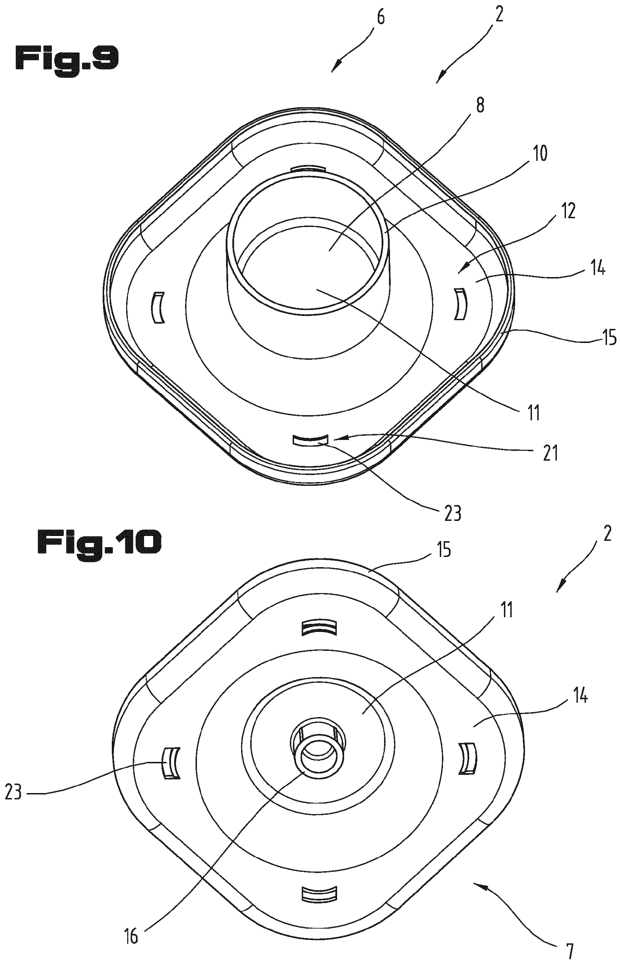

Die Fig. 9 und 10 zeigen eine perspektivische Ansicht des ersten Gehäuseteils 2 von schräg oben bzw. von schräg unten, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

In den Figuren 6 bis 10 sind die Einzelteile der Schneckenfalle 1 dargestellt, wobei deren Zusammenwirken in den Figuren 1 bis 5 ersichtlich und beschrieben ist.

Die Ausführungsbeispiele zeigen mögliche Ausführungsvarianten der Schneckenfalle 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus der Schneckenfalle 1 diese bzw. deren Bestandteile maßstäblich dargestellt wurden.

**Bezugszeichenaufstellung**

| | | | |
|---|---|---|---|
| 1 | Schneckenfalle | 28 | weitere Rastverbindung |
| 2 | erstes Gehäuseteil | 29 | Rastnase Wartungsdeckel |
| 3 | zweites Gehäuseteil | 30 | Rastvertiefung |
| 4 | Wartungsdeckel | 31 | Locköffnung |
| 5 | Erdspieß | 32 | Finger |
| 6 | Oberseite | 33 | Lockmittelbehältnis |
| 7 | Unterseite | 34 | Docht |
| 8 | erster Aufnahmeraum | 35 | Vorratskammer |
| 9 | Lockmittel | 36 | Austrittsöffnung |
| 10 | erste Begrenzungswand | | |
| 11 | Boden erster Aufnahmeraum | | |
| 12 | zweiter Aufnahmeraum | | |
| 13 | Schneckengift | | |
| 14 | Boden zweiter Aufnahmeraum | | |
| 15 | zweite Begrenzungswand | | |
| 16 | Aufnahmezapfen | | |
| 17 | Trennwand | | |
| 18 | Wartungsöffnung | | |
| 19 | schirmartiger Vorsprung Wartungsdeckel | | |
| 20 | schirmartiger Vorsprung zweites Gehäuseteil | | |
| 21 | Rastverbindung | | |
| 22 | Rastnase | | |
| 23 | Ausnehmung | | |
| 24 | Schräge | | |
| 25 | Sockelbereich | | |
| 26 | lichte Höhe | | |
| 27 | Wandhöhe zweite Begrenzungswand | | |

## Patentansprüche

1. Schneckenfalle (1) mit einem ersten Aufnahmeraum (8), welcher in etwa im Zentrum der Schneckenfalle (1) angeordnet ist und zur Aufnahme eines Lockmittels (9) dient und einem zweiten Aufnahmeraum (12) welcher den ersten Aufnahmeraum (8) umgibt und zur Aufnahme eines Schneckengiftes (13) dient, wobei der erste Aufnahmeraum (8) und der zweite Aufnahmeraum (12) in einem ersten Gehäuseteil (2) ausgebildet sind und dass ein zweites Gehäuseteil (3) ausgebildet ist, welches mittels einer Rastverbindung (21) am ersten Gehäuseteil (2) befestigt ist und den ersten Aufnahmeraum (8) zumindest bereichsweise umgibt, **dadurch gekennzeichnet, dass** an der Oberseite (6) des zweiten Gehäuseteils (3) eine Wartungsöffnung (18) ausgebildet ist durch welche Wartungsöffnung (18) der erste Aufnahmeraum (8) und der zweite Aufnahmeraum (12) zumindest teilweise zugänglich sind und dass ein Wartungsdeckel (4) ausgebildet ist, welcher zur Wartung bedarfsweise entfernbar in der Wartungsöffnung (18) des zweiten Gehäuseteils (3) aufgenommen ist.

2. Schneckenfalle nach Anspruch 1, **dadurch gekennzeichnet, dass** das zweite Gehäuseteil (3) einen schirmartigen Vorsprung (20) aufweist, welcher über den zweiten Aufnahmeraum (12) des ersten Gehäuseteils (2) hinausreicht und diesen in einer Draufsicht gesehen überdeckt.

3. Schneckenfalle nach Anspruch 1 oder 2, **dadurch gekennzeichnet, dass** der Wartungsdeckel (4) mittels einer weiteren Rastverbindung (28) in der Wartungsöffnung (18) des zweiten Gehäuseteils (3) aufgenommen ist.

4. Schneckenfalle nach einem der vorhergehenden Ansprüche, **dadurch gekennzeichnet, dass** das Lockmittel (9) in einem Lockmittelbehältnis (33) aufnehmbar ist, welches in den ersten Aufnahmeraum (8) einsetzbar ist, wobei das Lockmittelbehältnis (33) durch die Wartungsöffnung (18) aus dem ersten Aufnahmeraum (8) entfernbar ist.

5. Schneckenfalle nach Anspruch 4, **dadurch gekennzeichnet, dass** das Lockmittelbehältnis (33) zur Aufnahme einer Flüssigkeit ausgebildet ist und einen geschlossenen Innenraum aufweist, wobei das Lockmittelbehältnis (33) darüber hinaus einen aus dem Innenraum herausragenden Docht (34) zur dosierten Abgabe von Lockmittel (9) aufweist.

6. Schneckenfalle nach einem der vorhergehenden Ansprüche, **dadurch gekennzeichnet, dass** ein Erdspieß (5) ausgebildet ist, welcher abnehmbar an einer Unterseite (7) des ersten Gehäuseteils (2) befestigt ist.

7. Schneckenfalle nach einem der vorhergehenden Ansprüche, **dadurch gekennzeichnet, dass** die Rastverbindung (21) zwischen dem ersten Gehäuseteil (2) und dem zweiten Gehäuseteil (3) durch zumindest zwei im Bereich des zweiten Aufnahmeraums (12) angeordnete Ausnehmungen (23) und damit korrespondierende, am zweiten Gehäuseteil (3) angeordnete, Rastnasen (22) gebildet ist.

8. Schneckenfalle nach einem der vorhergehenden Ansprüche, **dadurch gekennzeichnet, dass** das zweite Gehäuseteil (3) eine zylindrische und parallel zur Mittelachse verlaufende Trennwand (17) aufweist.

9. Schneckenfalle nach einem der vorhergehenden Ansprüche, **dadurch gekennzeichnet, dass** das erste (2) und das zweite Gehäuseteil (3) als Spritzgusselemente, insbesondere aus einem Kunststoffmaterial, ausgebildet sind.

10. Schneckenfalle nach einem der vorhergehenden Ansprüche, **dadurch gekennzeichnet, dass** das zweite Gehäuseteil (3) im Bereich der Wartungsöffnung (18) zumindest eine Locköffnung (31) aufweist, durch welche das Lockmittel (9) nach außen wirken kann.

## Claims

1. A snail trap (1) having a first receiving space (8) which is arranged approximately in the center of the snail trap (1) and serves for receiving an attractant (9), and having a second receiving space (12) which surrounds the first receiving space (8) and serves for receiving a snail poison (13), wherein the first receiving space (8) and the second receiving space (12) are formed in a first housing part (2), and in that a second housing part (3) is formed, which is secured to the first housing part (2) by means of a latching connection (21) and surrounds the first receiving space (8) at least in regions, **characterized in that** a maintenance opening (18) is formed on the upper side (6) of the second housing part (3), through which maintenance opening (18) the first receiving space (8) and the second receiving space (12) are at least partially accessible, and **in that** a maintenance cover (4) is formed which, for maintenance purposes, is received in the maintenance opening (18) of the second housing part (3) such that it can be removed as required.

2. The snail trap according to claim 1, **characterized in that** the second housing part (3) has an umbrella-like projection (20) which extends beyond the second receiving space (12) of the first housing part (2) and covers the latter when viewed from above.

3. The snail trap according to claim 1 or 2, **characterized in that** the maintenance cover (4) is received in the maintenance opening (18) of the second housing part (3) by means of a further latching connection (28).

4. The snail trap according to any one of the preceding claims, **characterized in that** the attractant (9) can be received in an attractant container (33) which can be inserted into the first receiving space (8), wherein the attractant container (33) can be removed from the first receiving space (8) through the maintenance opening (18).

5. The snail trap according to claim 4, **characterized in that** the attractant container (33) is formed for receiving a liquid and has a closed interior, the attractant container (33) furthermore having a wick (34) projecting out of the interior for the metered delivery of attractant (9).

6. The snail trap according to any one of the preceding claims, **characterized in that** an earth spike (5) is formed which is removably secured to a lower side (7) of the first housing part (2).

7. The snail trap according to any one of the preceding claims, **characterized in that** the latching connection (21) between the first housing part (2) and the second housing part (3) is formed by at least two recesses (23) arranged in the region of the second receiving space (12) and latching lugs (22) corresponding thereto arranged on the second housing part (3).

8. The snail trap according to any one of the preceding claims, **characterized in that** the second housing part (3) has a cylindrical partition wall (17) running parallel to the center axis.

9. The snail trap according to any one of the preceding claims, **characterized in that** the first (2) and the second housing part (3) are formed as injection-molded elements, in particular made of a plastic material.

10. The snail trap according to one of the preceding claims, **characterized in that** the second housing part (3) has at least one bait opening (31) in the region of the maintenance opening (18), through which the attractant (9) can act outwards.

## Revendications

1. Piège à limaces (1) avec un premier espace de logement (8), qui est disposé approximativement au centre du piège à limaces (1) et qui permet le logement d'un moyen de verrouillage (9) et un deuxième espace de logement (12) qui entoure le premier espace de logement (8) et qui permet le logement d'un poison à limaces (13), le premier espace de logement (8) et le deuxième espace de logement (12) étant réalisés dans une première partie de boîtier (2) et une deuxième partie de boîtier (3) est réalisée, qui est fixée à la première partie de boîtier (2) au moyen d'une liaison par encliquetage (21) et qui entoure au moins partiellement le premier espace de logement (8), **caractérisé en ce que**, sur le côté supérieur (6) de la deuxième partie de boîtier (3), est réalisée une ouverture de maintenance (18), à travers laquelle ouverture de maintenance (18), le premier espace de logement (8) et le deuxième espace de logement (12) sont accessibles au moins partiellement et **en ce qu'**un couvercle de maintenance (4) est réalisé, qui est logé de façon à pouvoir être retiré pour la maintenance dans l'ouverture de maintenance (18) de la deuxième partie de boîtier (3).

2. Piège à limaces selon la revendication 1, **caractérisé en ce que** la deuxième partie de boîtier (3) comprend une saillie (20) en forme de bouclier qui dépasse au-dessus du deuxième espace de logement (12) de la première partie de boîtier (2) et recouvre celui-ci en vue de dessus.

3. Piège à limaces selon la revendication 1 ou 2, **caractérisé en ce que** le couvercle de maintenance (4) est logé au moyen d'une liaison par encliquetage supplémentaire (28) dans l'ouverture de maintenance (18) de la deuxième partie de boîtier (3).

4. Piège à limaces selon l'une des revendications précédentes, **caractérisé en ce que** le moyen de verrouillage (9) peut être logé dans un récipient d'appât (33), qui peut être inséré dans le premier espace de logement (8), le récipient d'appât (33) pouvant être retiré du premier espace de logement (8) par l'ouverture de maintenance (18).

5. Piège à limaces selon la revendication 4, **caractérisé en ce que** le récipient d'appât (33) est conçu pour le logement d'un liquide et comprend un espace interne fermé, le récipient d'appât (33) comprenant en outre une mèche (34) dépassant de l'espace interne pour le dosage de l'appât (9).

6. Piège à limaces selon l'une des revendications précédentes, **caractérisé en ce qu'**un piquet (5) est réalisé, qui est fixé de manière amovible sur un côté inférieur (7) de la première partie de boîtier (2).

7. Piège à limaces selon l'une des revendications précédentes, **caractérisé en ce que** la liaison par encliquetage (21) entre la première partie de boîtier (2) et la deuxième partie de boîtier (3) est constituée d'au moins deux évidements (23) disposés au niveau du deuxième espace de logement (12) et d'embouts d'encliquetage (22) correspondants, disposés sur la deuxième partie de boîtier (3).

8. Piège à limaces selon l'une des revendications précédentes, **caractérisé en ce que** la deuxième partie de boîtier (3) comprend une cloison (17) cylindrique s'étendant parallèle à l'axe central.

9. Piège à limaces selon l'une des revendications précédentes, **caractérisé en ce que** la première (2) et la deuxième partie de boîtier (3) sont réalisées comme des éléments moulés par injection, plus particulièrement à partir d'une matière plastique.

10. Piège à limaces selon l'une des revendications précédentes, **caractérisé en ce que** la deuxième partie de boîtier (3) comprend, au niveau de l'ouverture de maintenance (18), au moins une ouverture pour appât (31), à travers laquelle l'appât (9) peut agir vers l'extérieur.
